(19)

Europäisches
Patentamt

European
Patent Office

Office européen
des brevets

(11) **EP 4 481 684 A1**

(12) **EUROPEAN PATENT APPLICATION**

(43) Date of publication:
**25.12.2024 Bulletin 2024/52**

(21) Application number: **23181255.3**

(22) Date of filing: **23.06.2023**

(51) International Patent Classification (IPC):
**G06T 11/00** $^{(2006.01)}$

(52) Cooperative Patent Classification (CPC):
**G06T 11/005; G06T 2211/408**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventor: **SHECHTER, Gilad**
**Eindhoven (NL)**

(74) Representative: **Philips Intellectual Property & Standards**
**High Tech Campus 52**
**5656 AG Eindhoven (NL)**

(54) **DE-NOISING IN SPECTRAL CT**

(57) A method for improved reduction of negatively correlated noise (anticorrelated noise) artefacts in spectral CT imaging. A first set of embodiments employs an operation performed in the pre-decomposition projection domain by first decomposing acquired projection data (optionally with only a low-resolution decomposition), mapping the respective set of decomposed data values for each sinogram voxel to a known pre-computed statistical distribution of the anticorrelated noise associated with that set of decomposed data values, and then applying a smoothing operator which is tuned so as to reduce all noise variance values to below a set threshold. A further set of embodiments comprises detecting photon detector counts which are below a certain threshold (low count readings) and then determining a reliability index for each sinogram voxel having a detected set of low count readings. Those readings in the sinogram being below a threshold reliability are operated upon with a smoothing operator. This is based on a pre-computed probability distribution of different possible sets of detection count readings, the probability distribution based on a theoretical probability of each combination of reading counts given an assumed attenuation profile of the scanned body.

FIG. 3

EP 4 481 684 A1

**Description**

FIELD OF THE INVENTION

The present application relates to de-noising in spectral CT imaging.

BACKGROUND OF THE INVENTION

The following generally relates to projection data de-noising and is described with particular application to spectral/multi-energy computed tomography (CT). However, the following is also amenable to other imaging modalities such as a spectral/multi-energy digital x-ray and/or other spectral/multi-energy imaging.

A CT scanner includes an x-ray tube that emits radiation that traverses an examination region and an object therein. A detector array located opposite the examination region across from the x-ray tube detects radiation that traverses the examination region and the object therein and generates projection data indicative of the examination region and the object therein. A reconstructor processes the projection data and reconstructs volumetric image data indicative of the examination region and the object therein.

In spectral/multi-energy CT, a multi-energy projection dataset is acquired which effectively comprises multiple projection data subsets, each representing the attenuation properties of the scanned object for different X-ray spectra. Based on these data subsets, physical object properties can be determined locally, based on decomposing different component contributions to the x-ray attenuation (e.g., photoelectric effect, Compton scattering, water content, bone content, iodine content, etc.). The determination of these properties is called basis component decomposition. Where material composition is being investigated, this technique may be known as basis material decomposition. Two possible approaches for the decomposition are the decomposition in image domain and the decomposition in projection domain.

For image domain decomposition, an image is reconstructed for each acquired projection data subset, and the decomposition is performed on the reconstructed images, converting the reconstructed voxel values for one image location into material values. However, this approach tends to lead to image artifacts and biased material concentration values caused due to the beam hardening effect. For projection domain decomposition, the decomposition is performed by converting the 'measured line integrals' for each ray (i.e. the detector readings) into 'basis material line integrals' (i.e. the decomposed values). The basis material line integrals are then reconstructed to generate basis material images.

However, as a consequence of projection domain decomposition, the noise of the measured projection data might be strongly magnified. For the special case of only two basis components, this magnified noise is highly negatively-correlated for the two different basis line integrals of one acquisition ray. The increase of this correlated noise depends on the total attenuation along the given ray, and can therefore be enhanced in specific locations of the sinogram of all ray paths.

This is demonstrated in Tkaczyk et al., "Quantization of liver tissue in Dual kVp computed tomography using linear discriminant analysis," Proc. of SPIE, 7258, pp 72580G1-72580G 12, (2009), which shows that using two monochromatic spectra, when the energy dependence of the basis material attenuation profiles becomes similar or when the energy separation between the used spectra becomes small, the noise of the basis material line integrals of the same ray path can strongly increase and negatively correlate. The same phenomenon occurs for multi-energy polychromatic spectra.

The negatively correlated noise (between a pair of dual-energy spectral sinograms) in the projection domain leads to so-called noise-induced bias (NIB) in the decomposed sinograms and resulting reconstructed images. In particular, the decomposition algorithms are non-linear, so that noise is magnified in the decomposed sinograms. This can lead to streak artifacts in the reconstructed images. As a result, if images are directly reconstructed from the basis material line integrals, the basis material images can be noisy due to the noise amplification, which may reduce the clinical and/or diagnostic value of the basis material images. The correlated noise may also propagate to monochromatic images and reduce the spectral information contrast to noise ratio (CNR) for spectral applications.

The correlated noise may be referred to as negatively correlated noise or anti-correlated noise. Both terms are used in the art.

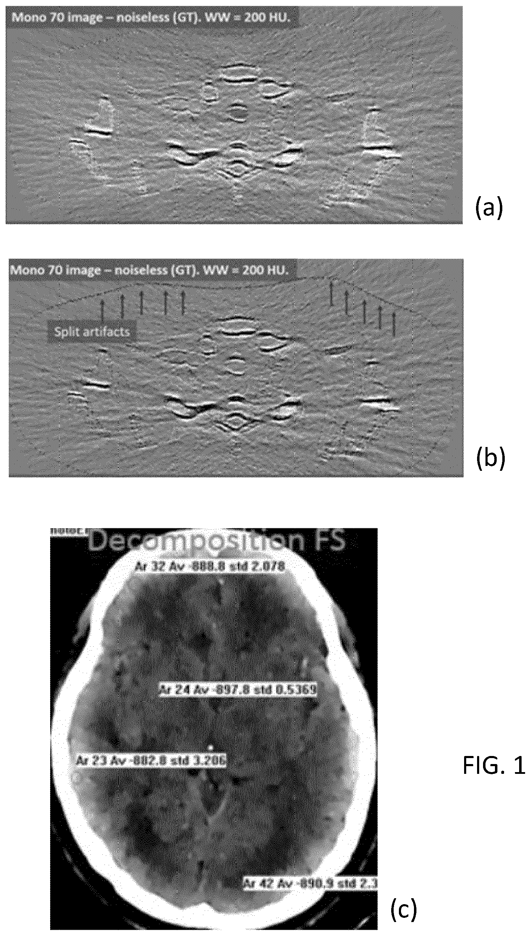

In addition to inducing visible artefacts in reconstructed images, the NIB mentioned above damages the accuracy of the spectral quantification. This is illustrated for example in Fig. 1(a) which shows a global artificial whitening effect which arises as a consequence of NIB.

A motivation behind the making of the present invention was a desire for improved methods to reduce the negatively correlated noise which arises in projection-domain decomposition.

Another motivation behind the making of this invention was a desire to find such de-noising methods which offer improved performance in the context of Photon counting CT systems, although the solution is not limited in its application to this domain.

Photon counting CT (PCCT) systems offer a superior spatial resolution as well as better spectral separation compared to use of (the more standard) scintillator detectors operated in integrating mode. For example, in the context of dual-energy spectral imaging, a previously well-explored approach was the use of a dual-layer integrating detector to simultaneously detect two spectrally distinct measurements (i.e. projection measurements through a same x-ray path through the body but at for different x-ray energies), using a front and a rear detector placed on top of one another, each configured to integrate over a different potion of the full x-ray spectrum of detected x-ray radiation.

Instead, a photon-counting detector is able to simultaneously obtain measurements at more than two different energy levels or bands, and therefore enables acquisition of more spectral information in a single scan.

A photon counting detector comprises a 1D or 2D array of detector elements (or detector pixels), each of which is capable of spectrally discriminating incoming x-ray photons and of counting received photons of different energies. In particular, each detector element has counting electronics which allow the filling of each x-ray event (meaning incidence of a particular x-ray photon) into one of N adjacent energy bins according to the energy of the incoming photon.

There are known methods which have some effect at reducing the negatively correlated noise. Some can be applied in the projection domain, before the decomposition algorithm is applied. An example is described in the document WO 2016/059527 A2. This is based on searching the pre-decomposition sinograms to identify pairs of high/low energy projection data measurements which both deviate from a (spatially) local mean of the high/low measurement values respectively, and deviate from their respective local mean in opposite directions. This indicates that the pair is subject to negatively correlated noise. Such identified pairs are then corrected by adding/subtracting a multiple of a local standard deviation of the measurement values to each of the pair of values, to thereby reduce the negatively correlated noise. This is known as the pre-decomposition denoising (PDDN) method.

Another method is described in US 10275859 B2. This is known as the 'frequency split method'. According to this method, the low-frequencies of the decomposed sinogram are decomposed after suppressing the high-frequencies of the pre-decomposition sinogram.

The PDDN method produces only moderately good results when used in the context of photon counting CT systems. In particular, the motivation behind using photon-counting systems is to provide very high resolution. However, the PDDN method is not sufficiently effective to provide the resolution which is theoretically possible.

The frequency split method is more effective, but can lead to new image artefacts due to mathematical irregularities, in particular in the spectral quantification. In particular, the use of this method leads to image artefacts expressed by the black contour indicated by the arrows in Fig. 1(b). In addition, in the presence of strong image gradients, this method can lead to non-acceptable tissue glaring near bones, for example in head images. This is illustrated in Fig. 1 (c).

An improved method for reducing correlated noise in decomposed projection data is therefore sought.

SUMMARY OF THE INVENTION

The invention is defined by the claims.

Embodiments of the present invention are based on exploiting a pre-determinable statistical distribution of negatively correlated noise values associated with particular sets of input or output values of any decomposition algorithm. An aim according to embodiments of the present invention is to reduce artefacts in the reconstructed image by seeking to adjust projection data values so that the variance of the correlated noise components of the values across whole of the sinogram is reduced below a certain threshold. By ensuring that the variance of the noise components (about a common mean) across the image is reduced, the resulting artefacts are largely eliminated, even if the noise components themselves are still partially present.

In particular, in accordance with one or more embodiments of the invention, there is provided a method for use in reducing anti-correlated noise in decomposed spectral computed tomography (CT) projection data, the decomposed spectral CT projection data being spectral CT projection data to which a pre-determined projection-domain spectral decomposition algorithm has been applied, and the anti-correlated noise being a noise component of the decomposed spectral CT projection data which arises upon application of the decomposition algorithm. The method comprises the following steps:

  obtaining a multi-energy CT projection dataset comprising multi-energy measurements for each of an array of detector elements;
  performing a first decomposition comprising applying the pre-determined decomposition algorithm to the CT projection dataset to generate a decomposed dataset which comprises a respective decomposed value set associated with each detector element;
  for each decomposed value set: lookup a pre-derived statistical distribution of the expected anti-correlated noise component associated with the particular decomposed value set, the statistical distribution having a known variance about a mean, and recording the value of said variance;
  forming a variance sinogram, each pixel of the variance sinogram corresponding to a respective detector element and having a pixel value defined by the variance value associated with the decomposed value set which corresponds to the detector element;

detecting outlier values in the variance sinogram as values which exceed a pre-defined variance threshold;

retrieving a mathematical operator adapted for application to a sinogram for modifying values of the sinogram, and tune one or more parameters of the mathematical operator for eliminating the outlier variance sinogram values;

form a projection data sinogram comprising a sinogram representation of the multi-energy projection data; and

apply the tuned mathematical operator to the projection data sinogram to obtain a smoothed projection dataset.

By way of further explanation, it may be understood that within a decomposed projection dataset, e.g. a decomposed sinogram, each decomposed reading set has an associated anticorrelated noise component. The anticorrelated noise arises, as explained above, from application of the decomposition algorithm to the detector measurement data (projection data). For instance, for a given dual-energy pair of detector readings, the output of the decomposition algorithm will be a known pair of decomposed values, plus a noise. The noise includes a correlated noise component (negatively correlated noise, or anticorrelated noise), which is a noise component which differs in an equal and opposite amount between the two decomposed values. The anticorrelated noise is variable, but has a predictable statistical distribution over multiple applications of the decomposition algorithm to a given multi-energy set of input readings.

In at least some cases, the expected mean of the anticorrelated noise for every possible multi-energy set of readings is the same. However, there exists a non-trivial variation about this mean over multiple iterations of the decomposition algorithm for each possible input multi-energy set of readings. This results in some quasi-random non-zero noise across the complete set of decomposed readings over the spatial extent of the projection sinogram, and therefore over the spatial extent of the decomposed sinogram.

Thus, it is the realization of the inventors that to address the negatively correlated noise, the problem to be solved may be understood as reducing the statistical variance of the correlated noise (about a common mean) over all the pixels of the decomposed sinograms to a lower level. It is this variation in the noise over the decomposed sinograms that is largely responsible for the artefacts; if all the noise values were the same, the noise would represent simply a systematic bias which could be filtered.

It has further been realized by the inventors that a way to achieve this result is to determine the variance of the anticorrelated noise for each individual possible decomposed reading set, over multiple iterations of the decomposition algorithm, in advance. In operation, a decomposed sinogram may then be converted into a 'variance sinogram' (by looking up known variance value associated with each decomposed set of readings) reflecting the known noise variance for each pixel of the sinogram.

Once this has been constructed, a smoothing kernel may be retrieved and tuned for each variance sinogram pixel above a threshold variance such that, if applied to the relevant pixel, it would reduce the variance to below the threshold. The fitted smoothing kernel is then applied to the equivalent sinogram pixels in the pre-decomposition domain.

Thus, embodiments of the present invention propose solving the problem of reducing noise variance over the spatial array of decomposed sinogram elements by translating the problem into an equivalent statistical distribution for each individual element (using the fact that this information can be computed in advance), and then converting the solution (the smoothing kernels) back into the spatial domain by applying the resulting smoothing kernels over the whole sinogram in the spatial domain.

The reduction of the noise variance reduces the noise-induced bias (NIB) discussed above. The efficacy of the method can be understood as follows. As previously discussed, the noise-induced bias arises from the anticorrelated noise in the decomposed projection data. The source of the anticorrelated noise in the decomposed data is noise in the pre-decomposition data (e.g. count data) which is non-linearly amplified by the decomposition algorithm. Thus, by finding a smoothing kernel that would effectively reduce the noise variance in the post-decomposition domain, the same kernel will also be effective at smoothing the original source of the noise in the pre-decomposition domain. This method leads to improved reduction of noise-induced bias compared to methods which apply smoothing purely in the post-decomposition domain. Furthermore, this method achieves improved maintenance of spatial resolution compared to methods which operate entirely in the pre-decomposition domain, without reference to the decomposed data. This is because the present method is able to more narrowly target the smoothing to eliminate the pre-decomposition noise which is specifically giving rise to post-decomposition anticorrelated noise.

In some embodiments, a smoothing operation is applied to the received CT projection dataset before applying the first decomposition. This results in a smoothed version of the original CT projection dataset, and wherein the remaining steps of the method are performed on this smoothed version of the dataset. This ensures that the first decomposition is performed on a pre-smoothed data which may help to ensure that the raw noise in the data does not result in decomposed values which are overly noisy.

In some embodiments, the multi-energy projection data may comprise measurement data for a photon counting detector. It may comprise, for each detector element, photon count values for each of a set of energy bins.

In some embodiments, the previously mentioned mathematical operator may be a smoothing kernel and wherein the smoothing kernel is tuned for each outlier element of the sinogram.

In some embodiments, the tuning of the smoothing kernel may be configured such that it takes into account the autocorrelation between noise components of decomposed value sets corresponding to neighboring elements of the detector.

In some embodiments, the method may further comprise, for each outlier variance value: looking up a known set of noise autocorrelation components for neighboring detector elements associated with the particular variance value, the autocorrelation components representing expected autocorrelation in anticorrelated noise with neighboring detector elements.

In some embodiments, the first decomposition comprises application of the pre-determined decomposition algorithm to only a subset of the measurement value sets, to obtain a partial decomposed dataset, and application of interpolation to obtain a complete decomposed dataset.

In some embodiments, each set of decomposed values may comprise values corresponding to contributions respectively of the photoelectric effect and Compton Scatter to x-ray attenuation.

In some embodiments, the method may further comprise applying the pre-determined decomposition algorithm to the smoothed projection dataset.

In some embodiments, the method may further comprise applying a reconstruction algorithm to obtain reconstructed image data.

Another aspect of this invention is a method permitting reduction of negatively correlated noise (anti-correlated noise) through improved smoothing of low-count readings in the projection domain.

A decomposition algorithm is configured to receive as input multi-energy projection data values and provide as output decomposed data values. The reliability of the decomposition can reduce for input values which are low. In particular, anti-correlated noise can be higher for input count values which are lower.

According to one or more embodiments, there is provided a method for use in reducing anti-correlated noise in decomposed spectral CT projection data, the decomposed spectral CT projection data being spectral CT projection data to which a pre-determined decomposition algorithm has been applied, and the anti-correlated noise being a noise component of the decomposed spectral CT projection data which arises upon application of the decomposition algorithm, the method comprising:

obtaining a multi-energy photon counting CT projection dataset comprising a respective set of detection count readings for a set of energy bins, for each of an array of detector elements;

identifying low-count reading sets by identifying sets of detection count readings for which the sum of the detection count readings across the bins is below a pre-defined threshold;

retrieving a pre-computed reliability index for each identified low-count reading set, the reliability index corresponding to a pre-computed theoretical probability of obtaining the particular set of detector bin count values in the reading set;

retrieve and apply a smoothing operator to a sinogram representation of the multi-energy projection dataset, the smoothing operator applied to the identified low count reading sets, wherein parameters of the smoothing operator for each reading set are configured in dependence upon the reliability index derived for the reading set.

This method can be applied in combination with embodiments of the previously described method, in which case it may form a preliminary phase of the previously described method, performed after obtaining the multi-energy CT projection dataset and before applying said first decomposition, and wherein the previously referenced multi-energy CT projection dataset is a photon counting CT projection dataset comprising a respective set of detection count readings for a set of energy bins, for each of an array of detector elements. Alternatively, the method may be applied independently of the previously discussed methods.

It is known to reduce low-count related artefacts by applying a smoothing filter to all count sinogram values which are below a certain threshold. This method outlined above proposes a more discriminatory filtering process, wherein low count readings are categorized according to their relative reliability, based on pre-computed probability distributions.

In some embodiments, the smoothing kernel may be configurable to adjust a strength of smoothing applied to each low count reading set, and wherein a strength of smoothing is modified according to the reliability index.

In some embodiments, the reliability index may comprise a product of a first and second component. The first component may comprise the said pre-computed theoretical probability of obtaining the particular set of detector bin count values in the reading set. The second component may comprise a pre-computed reliability variable, indicative of a pre-determined plausibility of a decomposed value set obtained when said pre-determined decomposition algorithm is applied to the reading set.

In some embodiments, the second component may have a value of 1 for low count readings whose corresponding decomposed value set is within a pre-defined plausibility range, and may have a value of 0 for low count readings whose corresponding decomposed value set is outside of the pre-defined range.

In some embodiments, the probability distribution may be derived based on application of the decomposition algorithm to low count reading sets to obtain corresponding decomposed readings, and a further reverse application of the decomposition algorithm to the obtained decomposed readings to derive theoretical detector count readings based on the decomposed values.

In some embodiments, the method may further comprise applying the pre-determined decomposition algorithm to the smoothed projection dataset.

In some embodiments, the method may further comprise applying a reconstruction algorithm to obtain reconstructed image data.

A further aspect of the invention provides a computer program product comprising computer program code configured, when run on a processor, to cause the processor to perform a method in accordance with any example or embodiment described in this disclosure.

A further aspect of the invention provides a processing arrangement, comprising: an input for obtaining a multi-energy CT projection dataset and one or more processors adapted to perform a method in accordance with any example or embodiment described in this disclosure on the obtained multi-energy CT projection dataset.

A further aspect of the invention provides a photon-counting CT system comprising the before-mentioned processing arrangement. In this case the projection dataset can be obtained from the photon-counting CT system itself.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1(a) illustrates examples of noise induced bias (NIB) artifacts expressed as a global whitening;
Fig. 1(b) and 1(c) show artifacts caused due to using the frequency split method.
Fig. 2 shows an example CT imaging apparatus;
Fig. 3 shows a block diagram of steps of a method in accordance with at least one embodiment;
Fig. 4 illustrates a pre-computed mapping from a set of decomposed sinogram values and a corresponding estimated variance of the negatively correlated noise component of the said set of decomposed sinogram values;
Fig. 5 shows a result of application of a method according to an embodiment, with resulting reduced NIB artefacts in the final image;
Fig. 6 shows a more advanced version of the method of Fig. 3, in accordance with at least one further embodiment;
Fig. 7 illustrates an example pre-computed dependence of noise autocorrelation components within a decomposed sinogram upon a variance associated with the noise;
Fig. 8 shows a further example method comprising additional pre-processing and post-processing steps;
Fig. 9 illustrates a problem of low-count induced artefacts within a reconstructed image;
Fig. 10 further illustrates the problem of low-count induced artefacts within a reconstructed image;
Fig. 11 shows a block diagram of steps of an example method according to at least one embodiment;
Fig. 12 shows a pre-computed field of decomposed value sets which are of acceptable reliability;
Fig. 13 and Fig. 14 show frequency distributions of low count readings in two sample sinograms according to their reliability index, whereby it is shown that more reliable readings occur more frequently in the sinograms;
Fig. 15 shows a further example method with additional pre-processing and post-processing steps; and
Fig. 16 shows an example system in accordance with one or more embodiments.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Embodiments of the invention provide improved reduction of negatively correlated noise (anticorrelated noise) artefacts in spectral CT imaging. A first set of embodiments propose to reduce negatively correlated noise using an operation performed in the pre-decomposition projection domain by first decomposing acquired projection data (optionally with only a low-resolution decomposition), mapping the respective set of decomposed data values for each sinogram voxel to a known pre-computed statistical distribution of the anticorrelated noise associated with that set of decomposed data values, and then applying a smoothing operator which is tuned so as to reduce all noise variance values to below a set threshold. A further set of embodiments of the invention also propose to reduce negatively correlated noise with an operation performed in the projection domain. This comprises detecting photon detector counts which are below a certain threshold (low count readings) and then determining a reliability index for each sinogram voxel having a detected set of low count readings. Those readings in the sinogram being below a threshold reliability are operated upon with a smoothing operator. This is based on a pre-computed probability distribution of different possible sets of detection count readings, the probability distribution based on a theoretical probability of each combination of reading counts given an assumed attenuation profile of the scanned body.

Regarding the first set of embodiments, the noise reduction effect relies on statistical assumptions, and from the fact that post-decomposition anticorrelated noise arises as a result of non-linear amplification of noise present in the underlying pre-decomposition projection data. This will be explained in more detail to follow.

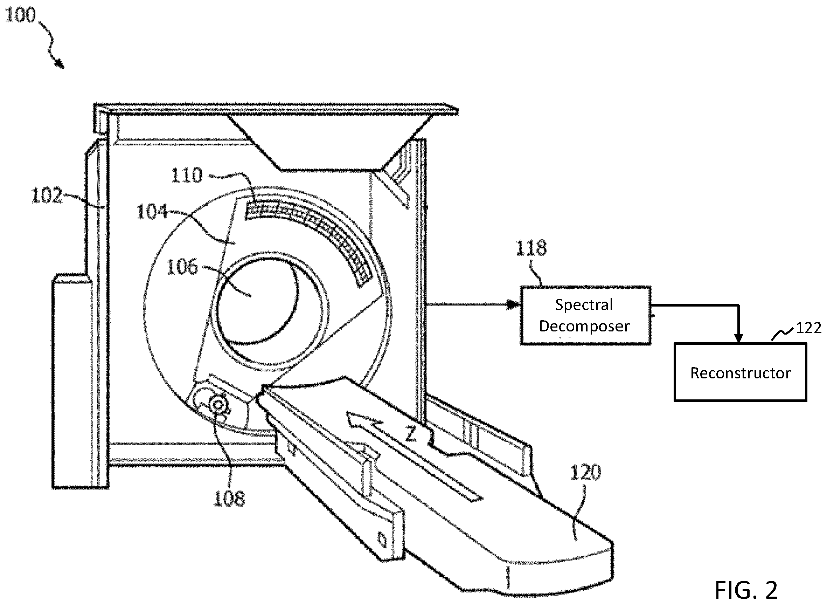

By way of introduction, Fig. 2 illustrates an example computed tomography (CT) imaging apparatus.

A radiation source 108, such as an x-ray tube, is rotatably supported by the rotating gantry 104. The radiation source 108 rotates with the rotating gantry 104 and emits radiation that traverses the examination region 106. A subject support 120, such as a couch, supports an object or subject in the examination region 108.

A radiation sensitive detector array 110 subtends an angular arc opposite the radiation source 110 across the examination region 106. The detector array 110 includes one or more rows of detectors that extend along the z-axis direction. The detector array 110 detects radiation traversing the examination region 106 and generates projection data (sometimes known as measured line integrals) indicative thereof.

In the illustrated example, the projection data is spectral/multi-energy projection data. As used herein, spectral/multi-energy projection data is projection data that includes at least two sub-sets of projection data, each representing attenuation properties of the scanned object for different X-ray spectra. The projection data thus comprises a set of detection or measurement values for each detector element of the detector array 110. Such projection data can be obtained by providing a detector which is controlled to emit energy alternately at two or more different energy levels (kVp switching) and/or wherein the detector is capable of detecting energy at multiple energy levels. For example, the detector array may include a photon counting detector and/or a multi-layer spectral detector, and/or the source 108 may include multiple sources that emit different energy spectrums and/or is configured to switch between at least two different energy spectrums during a scan.

A spectral decomposer 118 decomposes the acquired spectral/multi-energy projection data, producing decomposed spectral/multi-energy projection data, or basis material / basis component line integrals. In particular, each measured line integral can be decomposed into a linear sum of two or more basis component/material line integrals with corresponding coefficients. The decomposition can be based on two or more basis components such as the photoelectric effect, Compton scattering, water content, bone content, iodine content, a k-edge, and/or other basis components.

The decomposed projection data may be passed to a reconstructor 122.

The reconstructor 122 may employ a filtered-backprojection (FBP) reconstruction, a (image domain and/or projection domain) reduced noise reconstruction algorithm (e.g., an iterative reconstruction) and/or other algorithm. It is to be appreciated that the reconstruction apparatus 122 can be implemented through a microprocessor(s), which executes a computer readable instruction(s) encoded or embed on computer readable storage medium such as physical memory and other non-transitory medium. Additionally or alternatively, the microprocessor(s) can execute a computer readable instruction(s) carried by a carrier wave, a signal and other transitory (or non, non-transitory) medium.

An example method 10 in accordance with at least a first set of embodiments will now be outlined.

The method comprises obtaining 12 a multi-energy CT projection dataset comprising multi-energy measurements for each of an array of detector elements. In particular, for each detector element of the array, a set of measurement values are obtained, one for each energy level or energy spectrum propagated through the imaged body. For example, for dual-energy imaging, two detector measurement values may be obtained at each detector element for each imaging view/frame. An imaging view/frame means an x-ray projection at a particular angular position of the gantry. The overall projection dataset may comprise a sequence of multi-energy sinograms, one for each imaging view. The projection data may be photon-counting detector data or integrating detector data.

The method further comprises performing 14 a first decomposition comprising applying a pre-determined decomposition algorithm to the CT projection dataset to generate a decomposed dataset which comprises a respective decomposed value set associated with each detector element, for each angular frame/view of the projection data. For example, for dual energy imaging, a respective pair of decomposed values may be obtained for each detector element. In preferred embodiments, a smoothing operation is first applied to the CT projection dataset (before applying the decomposition) to create a smoothed CT projection dataset, and the decomposition algorithm is then applied to the smoothed CT projection dataset.

As will be known to the skilled person, a decomposition algorithm decomposes multi-energy CT projection data into two or more respective component contributions to x-ray attenuation of the materials in the scanned body. These can be the attenuation contributions of two or more different materials, e.g. calcium, water, iodine etc, or the attenuation contributions of two or more different attenuation phenomena such as the photoelectric effect and Compton scatter effect. These components of the attenuation may be referred to as a basis components, and the decomposed data comprises, for each detector pixel, a respective set of decomposed data values derived from application of the decomposition algorithm to the set of multi-energy measurement values corresponding to that detector element.

The first decomposition may be an approximate decomposition, or a low resolution decomposition. It may comprise application of the pre-determined decomposition algorithm to only a subset of the measurement value sets, to obtain a partial decomposed dataset, and application of interpolation to obtain a complete decomposed dataset. For example, the decomposition algorithm may be applied to a subset of measurement aim value sets, corresponding to those of only every $n^{th}$ detector element along each detector row. Interpolation may then be applied to this partial decomposed dataset to obtain a complete decomposed dataset (for all detector pixels). Optionally, before the interpolation, a smoothing kernel may be applied to the partial decomposed sinogram.

The decomposed data can be understood as forming a decomposed projection data sinogram.

The method further comprises, for each decomposed value set, looking up 16 a pre-derived statistical distribution of the expected anti-correlated noise component associated with the particular decomposed value set, the statistical distribution having a known variance about a mean, and recording the value of said variance.

For example, the method may comprise querying a data-store 32 which stores statistical information relating to the expected anti-correlated noise component associated each possible set of decomposed values. This information can be derived in advance from simulations or experiments and recorded in the datastore. In other words, in advance of performing this method, a large number of different sample sets of multi-energy measurement values can be input to the pre-determined decomposition algorithm, the resulting output decomposed value set recorded, and the resulting output decomposed value set analyzed to determine the negatively correlated noise component (anticorrelated noise component) present in the output decomposed values. If this is done a large number of times, there can be built up statistical information indicative of the anticorrelated noise component associated with each output set of decomposed values. A variance of the noise components for each possible output set of decomposed values can be derived. Typically, the mean of the negatively correlated noise for a given set of decomposed values is non-zero, expressing the noise-induced bias (NIB) formed by the non-linearity of the decomposition. However, the variance square root around this mean is typically much larger than the mean itself.

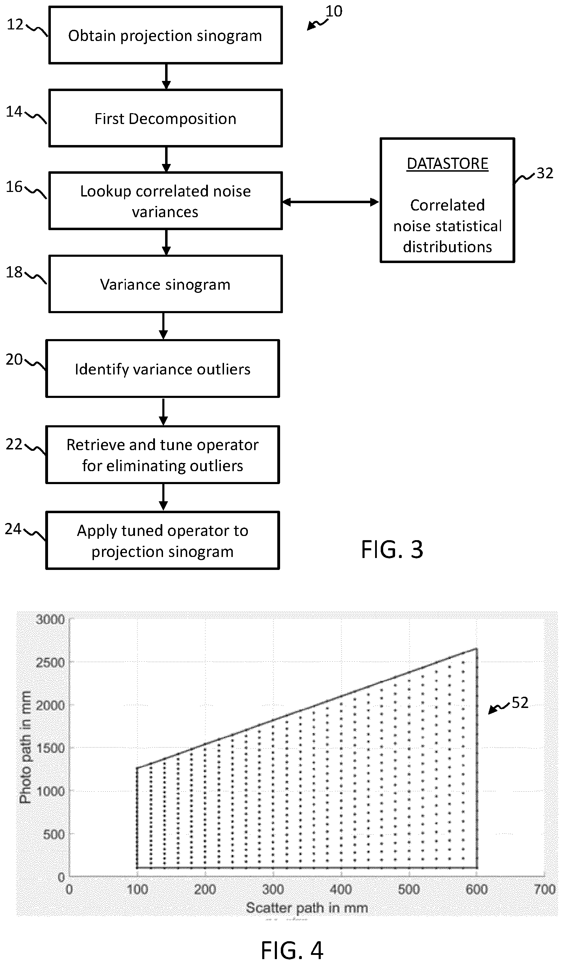

By way of illustration, Fig. 4 shows a visual representation of a dataset of noise variance values for each of a field of possible decomposed value sets. Each dot corresponds to a possible set of decomposed values, and the grey level corresponds to the variance of the anticorrelated noise. In this case, the decomposition algorithm is one which receives an input dual-energy pair of measurement values and outputs a pair of decomposed values corresponding to contributions respectively of the photoelectric effect and the Compton scatter effect (referred to as a Photo/Scatter value pair).

Thus, it can be seen that a dataset (e.g. a lookup table) may be prepared in advance permitting mapping from a given set of decomposed values in the decomposed projection dataset to a corresponding associated variance of the anticorrelated noise component expected for that set of values, where this is a variance over multiple repetitions of the same decomposition algorithm.

For each decomposed value set, the corresponding anticorrelated noise variance value associated with the decomposed value set is retrieved, and a 'variance sinogram' may be formed, by which is meant simply a data array, each element of the data array corresponding to a respective detector element of the detector array and having a value populated by the retrieved anticorrelated noise variance value associated with the corresponding detector element.

This data array can be represented in the form of an image having pixels, with pixel values corresponding to the values of the data array elements. Thus, it is referred to as a variance sinogram or variance image.

A next step of the method is to detect 20 values in the noise variance sinogram which exceed a pre-defined variance threshold. These may be referred to as outlier variance values. An aim is then to devise an operator which, if applied to the variance sinogram, which will have the effect of reducing these variance values to below the threshold. As explained later, this devised operator is then in fact applied to the original (pre-decomposition) projection data sinogram.

Thus a next step of the method is to retrieve 22 a mathematical operator adapted for application to a sinogram for modifying values of the sinogram, and tune one or more parameters of the mathematical operator for eliminating the outlier sinogram values. For example, the mathematical operator may be a smoothing kernel and wherein one or more parameters of the smoothing kernel are tuned for each outlier element of the sinogram. As will be explained in greater detail to follow, the tuning may comprise iteratively fitting the operator so as to reduce the variance values below the threshold.

Once the operator has been determined, it is then applied 24 to a sinogram representation of the original multi-energy projection dataset obtained in step 12 to derive a modified multi-energy projection dataset.

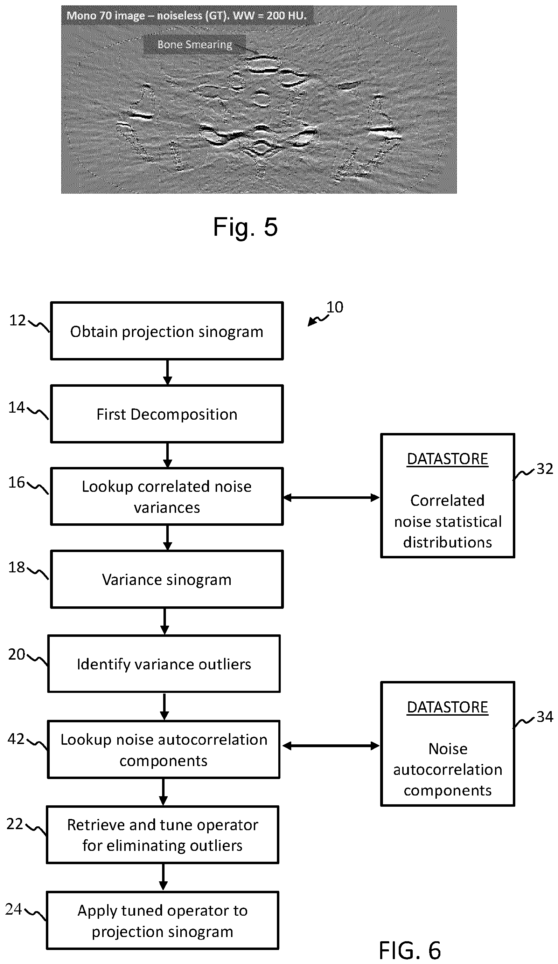

Following this, the same pre-determined decomposition algorithm is applied to the modified multi-energy projection dataset to derive a modified decomposed dataset. When this modified decomposed dataset is reconstructed, the noise-induced bias (NIB) artefacts associated with the anticorrelated noise are largely eliminated. Fig. 5 shows an example image which has been reconstructed based on a projection dataset which has been processed according to the method described above. This should be compared with the images shown in Fig. 1 (a) and (b). It can be seen that the NIB artefacts present in Fig. 1 (a) and the artifacts generated by using the frequency split method of Fig. 1 (b) and (c) have been eliminated in the image of Fig. 5.

The effects of this method can be understood from statistical considerations, as will now be explained.

After decomposition, the decomposed values for each detector element can be understood as each comprising a negatively correlated (anti-correlated) noise component. As discussed above, the negatively correlated noise component means a noise component which is present in both of the decomposed values (i.e. photo and scatter values in this example) for each detector element, but which is of opposite sign/polarity for each decomposed value.

For example, the decomposed photo and scatter values $d_{p(s)}$ for a given detector element, r, might be represented as follows:

$$d(r)_{p(s)} = d_0(r)_{p(s)} + n(r)_{p(s)} \qquad (2)$$

where $n(r)_{p(s)}$ is the anticorrelated noise component of the decomposed photo (p) and scatter (s) values for detector element r.

For a same given decomposition algorithm, there is a reliable statistical pattern associated with the anticorrelated noise component $n(r)_{p(s)}$ for a given decomposed value pair. In other words, over a plurality of executions of the algorithm, for a certain pair of output photo and scatter values, there exists a reliable statistical distribution, i.e. probability distribution, of the anticorrelated noise component. Given this, it is possible to define a theoretical expectation value, $E[n(r)_{p(s)}]$ of the anticorrelated noise component, $n(r)_{p(s)}$, associated with each possible pair of photo and scatter values at any detector element. In view of this, it is further possible to define a noise covariance matrix $C_{p,s}$ associated with the decomposed values $d(r)$ for a set of detector elements, r:

$$C_{p,s} = \begin{bmatrix} E(n_p(r) \cdot n_p(r)) & E(n_p(r) \cdot n_s(r)) \\ E(n_s(r) \cdot n_p(r)) & E(n_s(r) \cdot n_s(r)) \end{bmatrix} \qquad (3)$$

Within a small approximation, the first principal axis of $C_{p,s}$ is given as follows:

$$P_1(C_{p,s}) \approx \frac{[-1 \quad 1]}{\sqrt{2}} \qquad (3)$$

Therefore, an overall anti-correlated noise component associated with the pair of photo and scatter values can be defined as follows:

$$n_{ac}(r) = \frac{n_p(r) - n_s(r)}{\sqrt{2}} \qquad (4)$$

For each given pair of photo and scatter values output from a decomposition algorithm, this overall anticorrelated noise component, $n_{ac}(r)$, has a statistical distribution associated with it, which includes an expectation value and a variance about a mean. If the mean is assumed to be zero, then the variance of this anticorrelated noise, for a given pair of decomposed values, r, can be defined as:

$$V_{ac}(r) \equiv \sigma_{ac}^2 \equiv E(n_{ac}(r) \cdot n_{ac}(r)) \qquad (5)$$

As discussed above, it is possible to determine the variance $V_{ac}(r)$ of the anticorrelated noise component $n_{ac}(r)$ associated with each possible pair of decomposed values (or set of decomposed values for a decomposition into more than two basis components), within a defined working range of values. These variance values can be recorded in a look-up table, and cross-referenced with their associated pair or set of decomposed values.

It will be understood that the attenuation characteristics of the material vary not only with the voltage of the x-ray tube, but also the current of the tube. Thus, in preferred embodiments, a set of variance look-up tables is derived, each corresponding to a different possible current of the x-ray tube. Thus, the method in this case may comprise retrieving a pre-computed variance of the anticorrelated noise associated with each given set of decomposed values and associated with the current of the x-ray tube.

Generating the look-up tables may be done as follows. This is described for a decomposition into photo and scatter value pairs, but the same process can be applied for any other type of decomposition.

The process begins by defining a set of photo/scatter value pairs for which an associated anticorrelated noise variance is sought. These may span a certain working range. These may be referred to as 'original' photo/scatter pairs. For each original photo/scatter value pair within the pre-defined defined working range, the spectral model upon which the decomposition algorithm is based can be used to determine the theoretical pair of detector count values to which the decomposed pair of values correspond. In other words, the decomposition algorithm can be applied backwards to determine the corresponding pair of detector count values. A Monte-Carlo realization of noisy count values is then generated, centered around the identified pair of detector count values. The noisy count values are represented as a 3D raster. Any denoising steps or other pre-processing steps which are normally performed before the decomposition algorithm is applied are also applied at this point. Next, the decomposition algorithm is applied to each pair of noisy count values. This results in a corresponding noisy pair of decomposed values for each pair of noisy count values, wherein the noise in the decomposed values includes a component which is anticorrelated noise (which arises from amplification by the decomposition algorithm of at least part of the noise in the count values). Next, the anticorrelated noise component, $n_{ac}$ ($r$), of each pair of decomposed values can be derived. This can be achieved by first finding the total noise components of each pair of decomposed values by comparing it with the corresponding original decomposed value pair. The anticorrelated noise can then be found by simply finding the part of this total noise which is negatively correlated between the photo and scatter values in each pair. For example, this can be found by simply subtracting the noise of one of the photo/scatter pair from the other and dividing by $\sqrt{2}$, in accordance with equation (4) above.

From these derived anticorrelated noise components, the variance of the anti-correlated noise components can be derived. This process can be repeated for every pair of decomposed values which is to be included in the look-up table.

The look-up tables may be stored in a datastore, and accessed during operation of the method.

As discussed above, another step of the method, once the variance sinogram has been derived, is to fit a mathematical operator so as to reduce the variance values all below a given threshold. An example implementation of this step will now be described. In this example, the mathematical operator is a smoothing kernel. In particular, this example proposes use of a symmetric Finite Impulse Response (FIR) smoothing filter kernel.

In particular, the mathematical operator in this case could be represented in general terms by the kernel k(ro, m), which defines the bins of the kernel for each pixel ro of the sinogram, over the set $m$ of neighbor sinogram pixels over which the filtering (i.e. the convolution) is to be performed.

The effect of application of the kernel to a given pixel ro of the decomposed sinogram can be understood as follows:

$$V_{ac}^{smooth}(r_0) = V_{ac}(r_0) \cdot \sum_m k^2(r_0, m) \cdot \qquad (6)$$

where $V_{ac}(r_0)$ is the anticorrelated noise variance value at pixel roof the constructed variance sinogram, this being associated with the pair of decomposed values at the corresponding pixel ro of the decomposed projection sinogram. The index $m$ runs over the set of neighbor sinogram pixels which is to be included in the smoothing. Note that Eq. (6) can be understood from the Ergodic assumption which, in the present case, means that the noise components of the virtual readings corresponding to the readings that would have been obtained if the scan was repeated for many times, is similar to the noise components of the reading neighbors.

The step 22 of tuning the mathematical operator in this case is a step of determining the bins of the smoothing kernel k, such that the resulting smoothed variance value at each pixel of the variance sinogram is kept below a pre-defined threshold.

To this end, a threshold variance $V^T$ may be defined in advance which represents a maximum allowable anticorrelated noise variance value in the variance sinogram. As discussed already, the method can comprise a step 20 of identifying of values in the variance sinogram which are above this threshold variance value, and these may be referred to as outlier variance values. A typical value for this threshold may be about 0.1.

Step 22 may then simply comprise a fitting operation for fitting the kernel bins k(ro, m), for each variance sinogram pixel ro whose variance value exceeds the threshold $V^T$ such that, upon application of the kernel to the pixel $r_0$, the variance value is reduced to below the threshold. The fitting operation can be an iterative fitting operation.

The result is a kernel k(r, m) having bins separately tuned for each outlier variance value in the variance sinogram such that, when applied to the outlier values, they are each reduced to a value being below $V^T$.

The resulting tuned kernel is then applied to a sinogram representation of the original pre-decomposition projection data. It may be applied after any smoothing or filtering steps, or other pre-processing, normally performed before decomposition have already been applied.

In particular, the application of the smoothing kernel, k, to the pre-decomposition projection data may be expressed as follows:

$$c^{smooth}(r_0, b) = \sum_m k(r_0, m) \cdot c(r_0, m, b) \qquad (7)$$

where $c(r,b)$ represents the detector count reading at detector element r, and for energy bin $b$. For example, for dual energy CT, the index $b$ would run to 2. The index $r$ for the detector elements of course corresponds to the index r for sinogram pixels since there is one sinogram pixel for each detector element. Thus, the kernel k tuned with reference to the variance sinogram is applied in fact to a sinogram representation of the pre-decomposition projection data, in this case taking the form of detector count data c.

In other words, the smoothing is shifted into the pre-decomposition projection domain, in this case the count domain. This has the advantage of enabling elimination of the noise-induced bias (NIB) previously discussed without using the frequency split method previously discussed, thus avoiding the spectral split artifacts.

The above description represents a first set of embodiments. A further set of embodiments, being a further development of the first, will now be described. This embodiment set achieves superior results compared to the first.

In this second set of embodiments, the autocorrelation between anticorrelated noise components of neighboring decomposed sinogram elements is taken into account. The autocorrelation components of the anticorrelated noise have a reliable and pre-determinable relationship with the noise variance. In other words, if the variance of the anticorrelated noise for a given set of decomposed values is known, then the autocorrelation between the anticorrelated noise for that decomposed value set and the anticorrelated noise for neighboring decomposed value sets in the sinogram can be estimated, based on prior calculations, simulations or experiments.

Thus, in accordance with the present set of embodiments, further lookup tables are derived in advance, and accessed during execution of the method, which map the dependencies of each possible anticorrelated noise variance value with the autocorrelation coefficients between the noise variance value and neighboring noise variance values in the sinogram.

To explain further, in accordance with this set of embodiments, the mathematical operator may again be a smoothing kernel, but wherein the tuning of the smoothing kernel additionally takes into account the autocorrelation components.

In particular, the equation used for fitting the smoothing kernel may be modified compared to equation (6) above, to instead the following:

$$V_{ac}^{smooth}(r_0) = \sum_{m,m'} k(r_0, m) \cdot k(r_0, m') \cdot R_{ac}^0(m, m', r_0) \qquad (8)$$

where $R_{ac}(m,m',r_0)$ describes the autocorrelation between anticorrelated noise components $n_{ac}(r)$ of neighbor elements in the decomposed sinogram. The index m runs over all neighbor sinogram pixels which are to be included in the smoothing performed by the smoothing kernel, and the index m' runs over all neighbor readings for which the noise autocorrelation is to be taken into account. Note that $R_{ac}(m = r_0, m' = r_0, r_0)$ is equal to $V_{ac}(r)$.

The derivation of equation (8) above, can be understood as follows:

$$V_{ac}^{smooth}(r_0) = E\left[\left(\sum_m k(r_0, m) \cdot n_{ac}(r_0, m)\right)^2\right] \qquad (9)$$

$$= \sum_{m,m'} k(r_0, m) \cdot k(r_0, m') \cdot R_{ac}^0(m, m', r_0)$$

where

$$R_{ac}^0(m, m', r_0) \equiv E(n_{ac}(r, m) \cdot n_{ac}(r, m'))$$

Thus, to determine the smoothing operator in this set of embodiments, it is necessary to have derived in advance a mapping between each of a range of possible anticorrelated noise variance values $V_{ac}(r)$ and associated anticorrelated noise autocorrelation components $R_{ac}(r)$.

As opposed to the scalar variable $V_{ac}$, the autocorrelation $R_{ac}(m,m',r_0)$ is defined by a plurality of elements.

Consider for example the case in which the index *m* is defined to run over all 27 neighbor elements in the sinogram belonging to the 3x3x3 cube which is concentric with the reading denoted by $r_c$. It is noted that in this case, the three dimensions referred to are the two dimensions of each sinogram, in combination with a third dimension which runs over the set of different views or frames for which 2D sinograms have been obtained.

Ignoring symmetry, it would be necessary theoretically to calculate $5^3$ different elements of $R_{ac}(m,m',r_c)$ corresponding to independent shifts of detector columns, detector rows, and frames of readings m and m' that go between -1 and +1 (i.e. to form the 3x3x3 cube mentioned above).

However, due to symmetry, it is in fact only necessary to calculate 18 independent autocorrelation elements.

This can be achieved as described below.

There has already been described above a process for deriving variances of anti-correlated noise components associated with particular decomposed value sets. However, this process was based on generating (through a Monte Carlo method) a plurality of discrete noisy readings and then applying the decomposition algorithm and evaluating the anticorrelated noise for each discrete sample readings. For determining the autocorrelation components, it is necessary to generate not sample discrete readings but sample sinograms, so that autocorrelation between neighboring decomposed sinogram pixels can be evaluated.

Thus, it is proposed to generate a plurality of simulations of long scans of an anthropomorphic phantom, apply the decomposition algorithm to each, and to use the resulting decomposed simulation sinograms to determine noise autocorrelation components for sinogram pixels corresponding to different decomposed reading pairs. To this end, the simulated sinograms may be simulated to contain noisy readings. This may be done for multiple different sinogram pixels in each simulated sinogram, and for multiple different simulated sinograms. From this process, there can be derived an average of the anticorrelated noise autocorrelation components for each possible decomposed reading pair. A variance of the anti-correlated noise for each possible decomposed reading pair can also be derived using the method already discussed above. It is thus possible to derive a correlation between each possible noise variance and a set of autocorrelation components

Thus a set (a) of noisy photo/scatter sinograms may first be simulated. In addition, a corresponding set of noise-free photo/scatter sinograms are simulated. The noise value for each photo/scatter value can be derived by subtracting the noise-free sinogram from the noisy sinogram. The anticorrelated noise component for each photo/scatter value pair can be derived from equation (4) above. The anticorrelated noise variance can then be derived from the variance of the anticorrelated noise values over the set of simulated sinograms.

From (a) and (b), it is also possible to derive estimates of $R_{ac}(m,m',r)$ at different readings by extracting the anti-correlated noise component $n_{ac}$ in the neighborhoods of these readings and then calculating the average of $R_{ac}(m,m')$ across these neighborhoods. The typical size of these neighborhoods is about $10^3$ neighbors. To avoid any overlap between the neighborhoods used to estimate $R_{ac}(m,m')$ at different readings, the central points relative to which the autocorrelation values are calculated should be chosen sufficiently spread apart from one another.

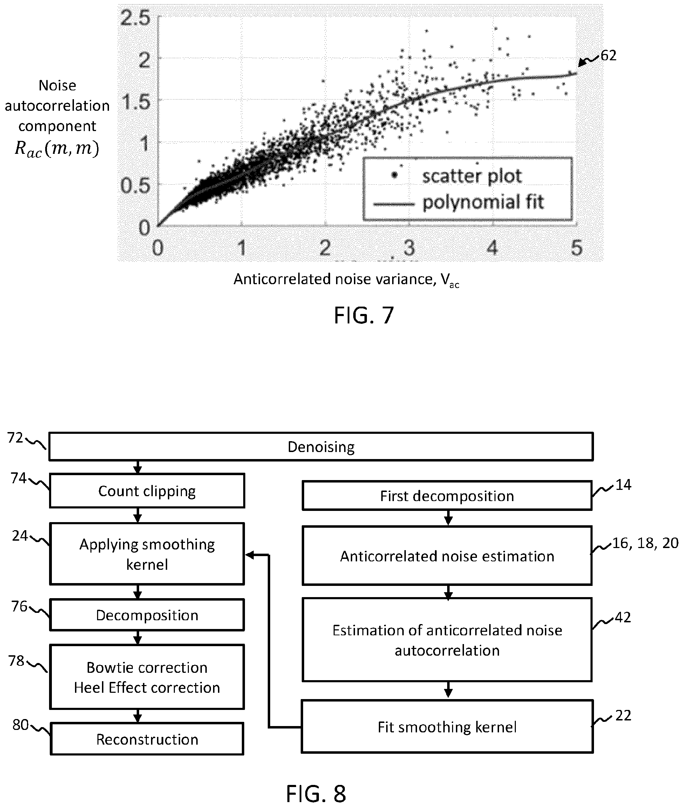

As a next step, a set of 1D scatter plots may be generated of $R_{ac}(m, m')$ vs $V_{ac}$ for each autocorrelation component to enable a dependency of each $R_{ac}(m, m')$ element on $V_{ac}$ to be looked up. An example of such a scatter plot is shown in Fig. 7. This shows an example an estimated dependency of $R_{ac}(m = r_0, m' = r_0, r_0)$ (y-axis), on $V_{ac}$ (x-axis). Each scatter point corresponds to a particular simulated sinogram decomposed reading pair, and the corresponding $R_{ac}(m, m)$ and $V_{ac}$ value derived for it. A polynomial fit 62 has been derived for the plot. This relationship could be stored in the form of a function, or in the form of a numerical look-up table. One such relationship is derived for each of the 10 independent $R_{ac}(m, m')$ components, for each possible value of $V_{ac}$.

With regards to Fig. 7, it is noted that, by definition, theoretically $R_{ac}(m = r_0, m' = r_0, r_0)$ is equal to $V_{ac}$. Thus, theoretically one might expect the relationship to be a simple straight line with a slope of 45°. In the illustrated example, this is not the case only due to the fact that $R_{ac}(m = r_0, m = r_0, r_0)$ was obtained after applying one or more de-noising step, whereas $V_{ac}$ was obtained without applying these steps.

In operation, the method comprises both a step of looking up 16 the noise variance values for each decomposed value set to form the variance sinogram, and further comprises a step of looking up noise autocorrelation components for each element of the variance sinogram, based on using the stored relationships between noise variance and autocorrelation for each of the 10 independent autocorrelation components. Equation(9) outlined above can then be used to tune the mathematical operator (smoothing kernel) for each outlier variance value so as to reduce the outlier variance values to below the variance threshold value.

Fig. 6 shows a block diagram outlining the steps of a method according to the second set of embodiments. In summary, the steps are the same as for the method outlined in Fig. 3 up to step 20. After step 20, the present method comprises the further step of looking up 42 the anticorrelated noise autocorrelation components $R_{ac}(m, m')$ associated with each identified outlier variance value. Thus this step depends on the previous step 16 of looking up the noise variance associated with each set of decomposed values. There may be stored in a datastore 34 a set of functional relationships defining, for each of a standard set of e.g. 10 autocorrelation components, a functional relationship between the component value and the anticorrelated noise variance value, e.g. as shown in Fig. 7. Alternatively, the information may be stored in the form of lookup tables.

Once the noise autocorrelation components have been retrieved, the mathematical operator, e.g. smoothing filter kernel, may be retrieved and tuned so as to reduce all variance values in the variance sinogram below the threshold, $V_T$, taking into account the anticorrelated noise autocorrelation components. For example, equation (9) outlined above could be used for this purpose, with the bins of the kernel $k$ equation being fitted iteratively so as to reduce $V_{ac}^{smooth}(r_0)$ below the threshold variance $V^T$.

The tuned operator is then applied 24 to the pre-decomposition projection data, in the manner as explained above with reference to equation (7).

The filtered projection data is then decomposed and reconstructed.

Regarding the step 22 of tuning the smoothing filter kernel, an example procedure for performing this will now be discussed further.

As discussed previously, fitting the smoothing kernel means determining the kernel bins $k(r_0,m)$ for each pixel ro of the variance sinogram and for each neighbor $m$ over which the smoothing convolution is to be performed.

The values $k(r_0,m)$ should sum up together to 1. It is also a requirement, that, after application of the smoothing kernel, the variance values $V_{ac}^{smooth}(r_0)$ are each reduced below the threshold $V^T$. To fulfil the latter requirement, a variety of approaches may be used. One example approach will be discussed briefly now.

First, for a given outlier variance value $r_0$, fixed smoothing weights are initially defined for all neighbor readings in the variance sinogram belonging to the 3x3x3 cube centered at the given outlier reading. Here, the three dimensions are formed by the two dimensions of the sinogram, composed of the detector pixel columns and the sequence of data frames (i.e. the series of angular views of the projection dataset), and the third dimension is along the detector pixel rows. Thus, the smoothing is performed in a 3D sinogram dataset formed of the series of 2D variance sinograms for the whole projection dataset.

Excluding the outlier reading ro itself, 26 fixed weights may thus be defined as follows:

$$w_{nn}(\Delta_c, \Delta_r, \Delta_f) = w_{nn}(\Delta_c) \cdot w_{nn}(\Delta_r) \cdot w_{nn}(\Delta_f) \tag{10}$$

$$w_{nn}(\Delta_c) = 1 - 0.2 \cdot \delta_{abs(\Delta c),1},$$

$$w_{nn}(\Delta_r) = 1 - 0.2 \cdot \delta_{abs(\Delta r),1}, w_{nn}(\Delta_f) = 1 - 0.6 \cdot \delta_{abs(\Delta f),1}$$

$$w(\Delta_c, \Delta_r, \Delta_f) = \frac{w_{nn}(\Delta_c, \Delta_r, \Delta_f)}{\sum_{\Delta c=-1}^{1} \sum_{\Delta r=-1}^{1} \sum_{\Delta f=-1}^{1} w(\Delta_c, \Delta_r, \Delta_f) \cdot w_{nn}(\Delta_c, \Delta_r, \Delta_f)}$$

$$w(\Delta_c, \Delta_r, \Delta_f) = (1 - \delta_{\Delta c,1}) \cdot (1 - \delta_{\Delta f,1}) \cdot (1 - \delta_{\Delta r,1})$$

After defining the fixed weights, an adaptive weight for each neighbor is defined by $\alpha \in [0\ 1]$. The final bins of the smoothing kernel are given as follows:

$$k(r_0, m) = \qquad \Delta_c = 0 \ \& \ \Delta_r = 0 \ \& \ \Delta_f = 0 \ \Rightarrow \ 1 - \alpha \tag{11}$$

$$\Delta_c \neq 0 \ | \ \Delta_r \neq 0 \ | \ \Delta_f \neq 0 \ \Rightarrow \ \alpha \cdot w(\Delta_c, \Delta_r, \Delta_f)$$

The next step is to determine $\alpha$. This can be achieved by substituting equation (10) and (11) into the equation (9) recited previously, and solving iteratively to find $\alpha$ such that $V_{ac}^{smooth}(r_0)$ is kept below $V^T$.

Fig. 8 shows a block diagram of a further method which represents an expanded version of the method of Fig. 6. The method of Fig. 8 includes additional pre-processing steps and post-processing steps.

The method comprises receiving a projection dataset.

The method comprises optionally applying 72 pre-decomposition projection domain denoising steps, for example the PDDN method mentioned earlier in this disclosure, and/or the a-VIPR method which is described in document "Comparison of ML iterative reconstruction and TV-minimization for noise reduction in CT images," K. M. Brown, S. Zabic, and T. Koehler, Proc. Fully 3D, pp. 443-446, (2011).

Optionally, the method further comprises applying 74 a count clipping procedure. Count clipping refers to filtering out count values outside of a certain range defined by upper and lower bounds. This excludes outlier count values that would otherwise result in erroneous decomposed values.

The method further comprises performing a first decomposition 14. The first decomposition may be an approximate decomposition, or a low resolution decomposition. It may comprise application of the pre-determined decomposition algorithm to only a subset of the measurement value sets, to obtain a partial decomposed dataset, and application of interpolation to obtain a complete decomposed dataset.

The method further comprises estimating the anticorrelated noise variance for each element of the decomposed sinogram. This may comprise the step discussed earlier of, for each decomposed value set, looking up 16 a pre-derived statistical distribution of the expected anti-correlated noise component associated with the particular decomposed value set, the statistical distribution having a known variance about a mean, and recording the value of said variance. A variance sinogram may be formed 18 from the identified variance values as discussed earlier. Outlier values may be detected by detecting 20 values in the noise variance sinogram which exceed a pre-defined variance threshold.

The method further comprises the step of estimating 42 the autocorrelation of the anti-correlated noise between neighbor readings of the decomposed sinogram. As already discussed, this can be performed by accessing a pre-determined set of mappings between anticorrelated noise variance values in the variance sinogram and associated anticorrelated noise autocorrelation components, $R_{ac}(m, m')$. The mappings may take the form of a set of 1D curves, one for each autocorrelation component, each curve defining a mapping between the anticorrelated noise variance value for a given sinogram pixel and one of the anticorrelated noise autocorrelation components.

Using the estimated noise autocorrelation components, $R_{ac}(m, m')$, the method further comprises the step of fitting 22 the parameters of the smoothing kernel, k, based on the autocorrelation components, so as to reduce the noise variance values all below a noise variance threshold, $V^T$. For example, this may comprise calculating the weights of an adaptive smoothing kernel. This can be done using equation (9) discussed above.

Once the smoothing kernel has been fitted, the method comprises applying 24 the smoothing kernel to the pre-decomposition projection data, for example to a sinogram representation of the pre-decomposition projection data. This results in a smoothed or filtered projection dataset.

Following this, the method comprises applying 76 the decomposition algorithm to the smoothed projection dataset.

Optionally the method may further comprise application 78 of additional filtering or post-processing. For example, the method may comprise applying a bowtie effect filter, such as for example is described in the document US2021059633. The method may further comprise applying a heel effect filter, such as for example is described in the paper US2008317320.

The method further comprises applying 80 a reconstruction algorithm, such as a filtered back projection reconstruction algorithm to reconstruct an imaging dataset.

A further improvement in this invention is a low-count correction procedure permitting reduction of negatively correlated noise (anti-correlated noise) through improved smoothing of low-count readings in the projection domain in the case of photon-counting CT systems, in which acquired projection data comprises photon count data for each detector element for each of a set of energy bins. A decomposition algorithm is configured to receive as input multi-energy projection data values and provide as output decomposed data values. The reliability of the decomposition can reduce for input values which are low. In particular, anti-correlated noise can be higher for input count values which are lower. In addition, noise in non-spectral images can also be higher for low-count values. This arises from the fact that, for low count readings, the standard error is comparable in magnitude to the readings themselves, leading to a low degree of reliability.

Outlined below is a method which can be used in combination with the smoothing method already described above, or may be applied independently of this method. Where applied in combination with the method applied above, it may be applied in advance of applying the method described above.

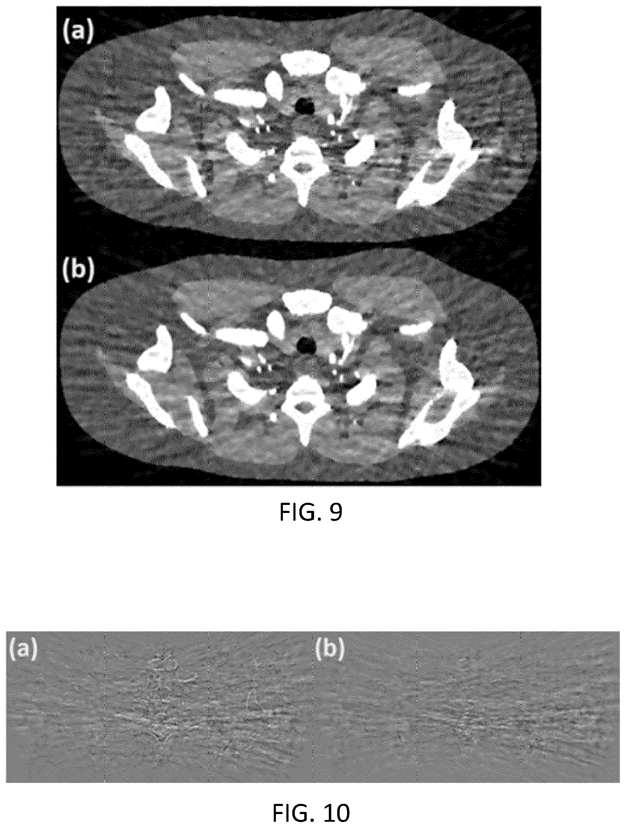

The problem addressed by embodiments described hereinbelow is illustrated in Fig. 9 and Fig. 10. Fig. 9 (a) shows an example CT photo image without low count correction applied. Fig. 9(b) shows the same CT image after the low count correction of the method described below has been applied. Horizontal streak artefacts are present in (a), whereas the streaks are reduced in (b). Fig. 10 illustrates application of the low-count correction method. In particular, three scatter images (i.e. spectral images formed from the scatter component of a decomposed spectral dataset) are used, from which two difference images are generated. The first image is an image obtained without the low-count correction, as in Fig. 9(a). The second image is an image obtained using a standard low-count smoothing method in which all low-count readings are smoothed. The third image is that obtained after application of the low-count correction method of the present application, i.e. in which only low-count readings having a low reliability index are smoothed. Fig. 10(a), shows the second image subtracted from the first image. Fig, 10(b) shows the third image subtracted from the first image. In Fig. 10(a), clear bone residuals are obtained illustrating a loss of spatial resolution resulting from smoothing all the low-count readings. In Fig. 10(b), these residuals are not present, illustrating the fact that the low-count correction method of the present application avoids loss of resolution.

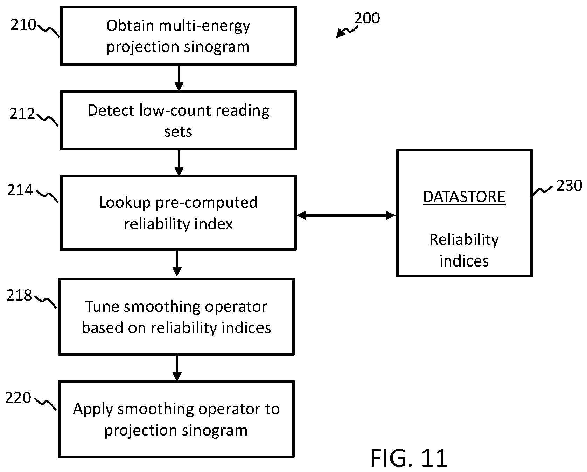

Fig. 11 outlines the steps of an example method in accordance with one or more embodiments. As mentioned above, this method can optionally be applied in combination with the method of Fig. 3 or Fig. 6, in which case it is applied just before step 14 in each of those methods.

The steps of the method will first be outlined in summary, before more detailed explanation is provided.

The method comprises obtaining 210 a multi-energy projection dataset for a scanned body comprising a respective set of photon count readings for a set of energy bins for each of an array of detector elements.

The method further comprises identifying 212 low-count reading sets by identifying sets of detection count readings for which the sum of the detection count reading set is below a threshold. A given set of detection count readings may be expressed as $c(b)$, where the index $b$ runs over the set of energy bins that each detector element is operable to obtain counts for. This step may be understood as identifying count reading sets for which the following condition is true:

$$\sum_{b=1}^{n_b} c(b) < T_{low-count} \qquad (12)$$

where $n_b$ is the total number of energy bins and $T_{low-count}$ is the threshold cumulative sum of counts below which the reading set is classified as a low count reading.

The method further comprises retrieving 214 a pre-computed reliability index for each identified low-count reading set, the reliability index corresponding to a pre-computed theoretical probability of obtaining the particular set of detector bin count values in the reading set. This may be retrieved from a datastore 230.

The method further comprises retrieving and tuning 218 parameters of a smoothing operator, wherein the parameters of the smoothing operator for each reading set are configured in dependence upon the reliability index derived for the reading set.

The method further comprises applying 220 the smoothing operator to a sinogram representation of the multi-energy projection dataset, the smoothing operator applied only to the identified low count reading sets.

Thus this method is based on smoothing low-count readings in a photon count detector projection dataset, wherein the smoothing is adapted according to a reliability index derived for each low count reading, the reliability index being based on a pre-computed probability distribution.

As compared with simply smoothing all low count readings, the selective and adaptive smoothing method proposed here avoids visible smearing of the image. This is illustrated by Fig. 10 already discussed.

The steps of the method will now be explained in greater detail.

According to a preferred set of embodiments, the reliability index mentioned above is formed of two parts: a first reliability index part (which might be referred to as a non-statistical reliability index part); and a second, variable index part (which might be referred to as a statistical index part). The first, non-statistical reliability part could be skipped in alternative embodiments. The overall reliability index may comprise a product of these two index parts. Each of these parts has a value between zero and one. In this case, the first part effectively sets the reliability at zero in case of low count readings which are decomposed into photo/scatter pairs that fall outside of a pre-defined range or zone. For low-count readings within the pre-defined range or zone, the reliability index is additionally calculated in dependence upon the second reliability index part. Both parts are obtained using pre-computed lookup tables or functions which allow mapping of a multi-bin detector reading set for a given detector element to a reliability index. Each index part may be stored in a separate one or more lookup tables, or the overall reliability index, formed of both parts, may be stored in one or more lookup tables. Thus, to explain the method further, the process for pre-computing these mappings from the low-count reading to the reliability index will now be described.

For brevity, in the following explanation, the term 'reliable' will be used to refer to readings which are more consistent, or more likely to occur, based on the decomposed values which are obtained from them.

A first step is to identify in advance the group of detector count reading sets which fall into the category of low count readings. This group, $g_{lc}$, may be written formally as follows:

$$g_{lc} = \left\{ [c(1), c(2), \ldots c(n_b)] \ \middle| \ \sum_{b=1}^{n_b} c(b) < T_{low-count} \right\} \qquad (13)$$

By way of illustration, for $n_b$ = 5 and $T_{low-count}$ = 40, the group $g_{lc}$ contains 1,086,008 different low count reading sets. A typical value of the threshold $T_{low-count}$ may be about 40 counts.

The pre-calculation of the mappings begins by decomposing each of these possible sets into a decomposed reading set using a pre-determined decomposition algorithm. By way of example, it may be decomposed into a photo/scatter value pair. The decomposition algorithm should be the same one that is to be used when processing the data 'on-line' after performing the low count correction. For simplicity, in some examples, the decomposition algorithm may be one which assumes zero cone and zero fan angles. In other words, the decomposition is performed assuming that all readings originate from the detector pixel which is approximately at the center of the detector array.

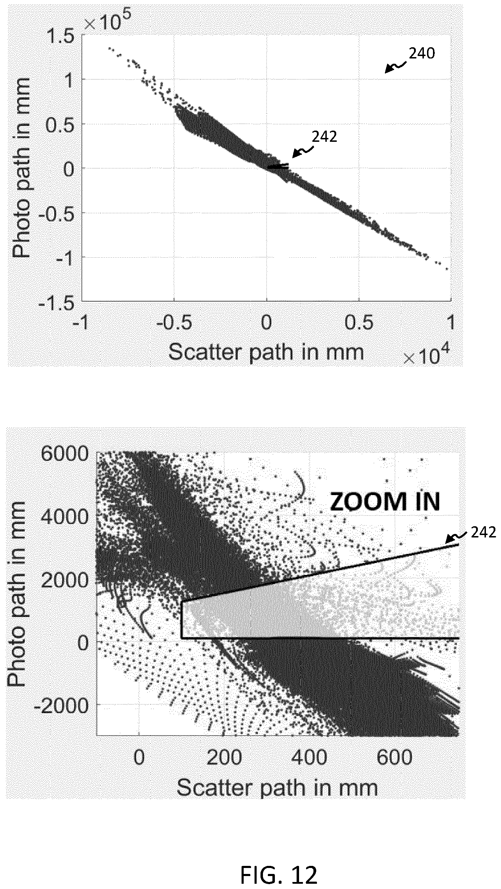

A next step is to assess a reliability of each low count reading combination based on a plausibility of the decomposed values obtained from the respective low count reading combination. This plausibility is decided manually by simply defining a range or zone of photo/scatter path combinations which are considered to be of acceptable or reasonable reliability. By way of illustration, Fig. 12 shows an example plot 240 of all of the decomposed photo/scatter component pairs for the full set $g_{lc}$ of low count reading combinations. At the area 242 (shown more clearly in Fig. 12 (right)) is a defined range or zone of decomposed reading pairs which are considered to be plausible. The low count reading sets whose decomposed photo/scatter pairs are outside of the zone 242 are classified as unreliable. In the illustrated example, the vertical and lower horizontal border lines correspond to scatter path = 100mm and photo path = 100mm respectively. These were chosen based on the given current of the x-ray tube. The upper border line having a positive slope was chosen based on some a-priori knowledge regarding the zone of photo/scatter value pairs which make sense clinically.

It is noted that although in Fig. 12 almost all of the theoretically possible low-count combinations appear to have been excluded as non-reliable, in fact 56% of the low-count combinations having photo/scatter pairs which are within the defined reasonable zone 242. Furthermore, the low count combinations whose photo/scatter pairs are within the reasonable zone 242 occur more frequently within scan sinograms in actual clinical practice. For example, for an NCAT shoulder scan simulated at a tube current of 150 mA, it was found by the inventors that 70% of the low-count reading combinations present in the projection data for the scan fell within the borders of the reasonable zone 242.

A first reliability index component is defined $r_v^{ps}$, which takes a value between zero and 1: $r_v^{ps} \in [0\ 1]$. Low count reading sets whose decomposed photo/scatter value pairs are within the bounds of the defined reasonable zone/range 242 and far enough from its borders are assigned a value of 1. Low count reading sets whose decomposed photo/scatter value pairs are outside of the bounds of the defined reasonable zone/range 242 are assigned a value of 0. A smooth function may be defined at the boundary of the zone 242, and wherein low count reading sets within this boundary region are set a value between 0 and 1 in accordance with the function.

A second reliability index component, $r_v^{cdf}$, which takes a variable value between zero and 1 can be defined, based on use of a probability distribution for the low count readings. The final reliability index for each low count reading set can then be defined as the product of the first and second reliability indices, i.e.

$$r_v = r_v^{ps} \cdot r_v^{cdf} \qquad (14)$$

In some embodiments, the overall reliability index $r_v$ may consist simply of the second reliability index component $r_v^{cdf}$ alone. However, preferred embodiments include both components.

This second reliability index component uses a cumulated distribution function (CDF). This is used to find the theoretical relative likelihood of the different low-count reading combinations, based on the decomposed photo/scatter values obtained from each of these readings. These likelihoods are again pre-computed in advance so that the index component $r_v^{cdf}$ can be looked up during execution of the low count correction method.

In particular, the pre-computing comprises, for each possible low-count reading set, decomposing the reading set using the decomposition algorithm to obtain the corresponding photo/scatter value pair. As the skilled person will appreciate, the photo/scatter values correspond to the equivalent path lengths, $l_p$, $l_s$ through the scanned object represented by the respective contributions of the photo electric effect and the Compton scatter effect to the x-ray attenuation, based on assumed energy-dependent attenuation profiles $\mu_p$, $\mu_s$ of the photoelectric and Compton scatter effects. From this, the theoretically expected detector count readings $c_{exp}(b)$, for energy bins $\forall b \in 1{:}n_b$ are computed for each low count reading set, based on the decomposed photo/scatter path pair, $l_p$, $l_s$ for the low count reading set, as follows:

$$c_{exp}(b) = \sum_{E=keV_{min}}^{keV_{max}} c_{air}(E, b) \cdot \exp\big(-l_p \cdot \mu_p(E) - l_s \cdot \mu_s(E)\big) \quad \forall b \in 1{:}n_b \qquad (15)$$

Here, the index b runs over the set of energy bins (in this case more than two energy bins), E is the photon energy, $c_{air}(E, b)$

is the bin-dependent count reaching the central detector pixel during an air scan $I_p$, $I_s$ are the decomposed photo/scatter equivalent path lengths for the given low count reading set, and $\mu_p$, $\mu_s$ are the assumed energy-dependent attenuation profiles of the photoelectric and scatter mechanisms.

$$v_{exp}^{c} = \left[c_{exp}(1), c_{exp}(2), \dots, c_{exp}(n_b)\right]$$

A vector can be defined, of the expected detector count readings for each pair of decomposed paths.

The $n_b$-dimensional Poisson probability distribution function (PDF), is next defined as follows:

$$PDF_{v_{exp}^{c}}(v^c) = \prod_{b=1}^{n_b} \frac{\left(c_{exp}(b)\right)^{c(b)}}{c(b)!} \exp\left(-c_{exp}(b)\right); \qquad (16)$$

$$v^c \equiv [c(1), c(2), \dots, c(n_b)]$$

Here, $c(b)$ is the original low-count reading set, whereas $c_{exp}(b)$ is the computed expected low count reading set, back-computed from the decomposed photo/scatter value pair for $c(b)$.

For every bin $b$, $c(b)$ can take values between 0 and oo. To simplify the calculation, the above-defined PDF can be replaced by a finite version. This is achieved by restricting $c(b)$ (and therefore $v^c$) according to the well-known six-sigma range:

$$c(b) \in c_{min}(b) : c_{max}(b) \quad \forall b \in 1 : n_b; \qquad (17)$$

$$c_{min}(b) = \max\left(c_{exp}(b) - ceil(3 \cdot \sigma), 0\right),$$

$$c_{max}(b) = c_{exp}(b) + ceil(3 \cdot \sigma)$$

$$\sigma = \sqrt{c_{exp}(b)}$$

Due to this new restriction on the range of $c(b)$, the above PDF is no longer normalized correctly, and thus a normalization is applied as follows:

$$PDF_{v_{exp}^{c}}^{norm}(v^c) = \frac{PDF_{v_{exp}^{c}}(v^c)}{D} \qquad (18)$$

$$D = \sum_{v^c \mid c(b) \in c_{min}(b) : c_{max}(b) \; \forall b \in 1 : n_b} PDF_{v_{exp}^{c}}(v^c)$$

The function $PDF_{v_{exp}^{c}}^{norm}(v^c)$ may then be used to derive a likelihood of each original low-count reading set $v^c \equiv [c(1), c(2), \dots, c(n_b)]$.

This can be achieved using a cumulative distribution function as follows:

$$CDF_{v_{exp}^{c}}^{norm}(v^c) = \sum_{v'^c \in g_{v_{exp}^{c}, v_c}} PDF_{v_{exp}^{c}}^{norm}(v'^c) \qquad (19)$$

$$g_{v_{exp}^{c}, v_c} \equiv v'^c \mid PDF_{v_{exp}^{c}}^{norm}(v'^c) < PDF_{v_{exp}^{c}}^{norm}(v^c)$$

$CDF_{v_{exp}^{c}}^{norm}(v^c)$ gives the probability (between zero and one) that a random realization of integer noisy counts will have a likelihood to occur which is equal or smaller than the probability of the original low count reading. This derives in part from the equation (15) above which describes the likelihood for the generation of different integer noisy counts (from the expectation values $c_{exp}(b)$).

Using the above, the second reliability index part $r_v^{cdf}$ can be taken as $CDF_{v_{exp}^c}^{\mathrm{norm}}(v^c)$. By definition, $r_v^{cdf} \in [0\ 1]$. It describes the likelihood of each original low count combination $v^c$, given $CDF_{v_{exp}^c}^{\mathrm{norm}}$, relative to other low count combinations fulfilling equation (17) above.

The value of $r_v^{cdf} = CDF_{v_{exp}^c}^{\mathrm{norm}}$ can be determined in advance for each low count value set $v^c$ in the group $g_{lc}$, and stored for example in a lookup table for retrieval during application of the smoothing method.

To illustrate the second part of the reliability index, $r_v^{cdf}$, two example low-count readings sets might be considered, as set out in Table 1 below:

Table 1

| Combination | c(1) | c(2) | c(3) | c(4) | c(5) | $r_v^{cdf}$ |
|---|---|---|---|---|---|---|
| a | 8 | 8 | 7 | 8 | 8 | 0.68 |
| b | 9 | 9 | 2 | 9 | 10 | 0.15 |

Both combinations a and b in Table 1 contain 39 counts summed over the 5 energy bins c(1)..c(5).

While the sum of the two counts (a) and (b) are the same, it can be seen that in count set (b), the reading in the third bin is inconsistent with the readings in the rest of the bins. By contrast, in set (a), the counts are roughly consistent across the bins. Thus, it can be recognized intuitively that count set (b) is less plausible that count set (a). It can further be seen that this is reflected in the different values for the second reliability index component $r_v^{cdf}$, which is 0.68 for count set (a) and only 0.15 for count set (b).

Finally, the overall reliability index for each low-count reading can be defined, as previously stated, as

$$r_v = r_v^{ps} \cdot r_v^{cdf}$$

The indices $r_v$ can be stored in advance for each low count combination $v^c$.

As will be explained below, in operation, smoothing may be applied to low-count reading sets of obtained photon-count projection data with a smoothing strength determined in dependence upon the reliability index $r_v$ for that low count reading set.

This method has the effect of reducing streak artefacts caused by anticorrelated noise without smearing the sinogram and the image. This can be understood from the fact that the lower is the reliability of a given low count reading set, the less frequently it presents in obtained sinograms. Therefore, applying smoothing strongly to only low-reliability reading sets causes only minimal smearing of the overall sinogram because low-reliability readings are relatively infrequent.

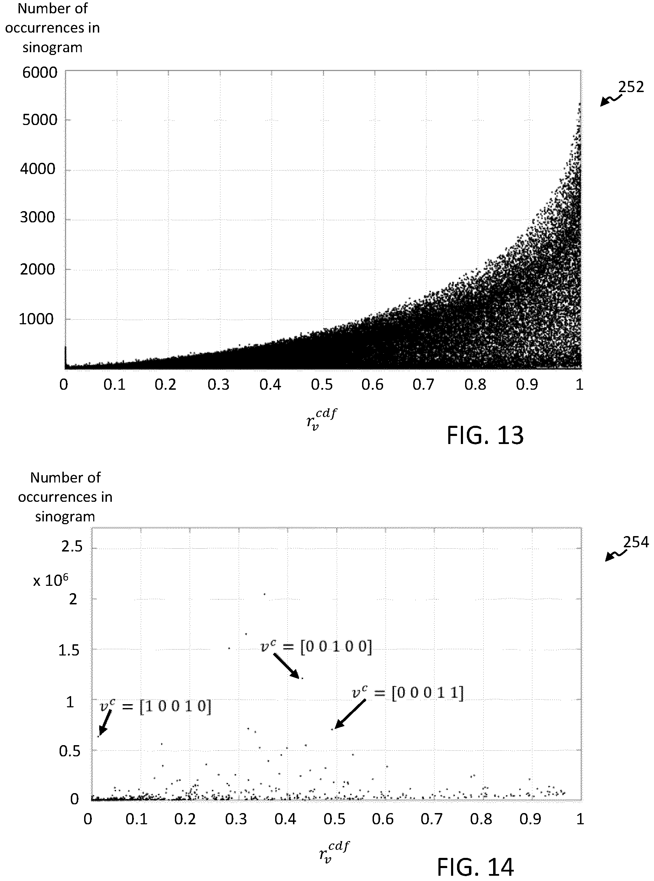

To illustrate this, Fig. 13 shows a scatter frequency distribution of low-count reading sets having different reliability indices $r_v^{cdf}$ within a sample sinogram obtained for a simulated NCAT shoulder scan. Each point on the plot is a low-count reading set; the x-axis is the reliability index $r_v^{cdf}$, and the y-axis is the occurrence/frequency rate in the sinogram. This plot shows only low-count readings whose sum is in the range between 30 and 39. It can be seen that the low count reading sets with low reliability index occur less frequently in the sinogram than those with high reliability index.

Fig. 14 shows a similar frequency plot for low-count reading sets whose sum is within the range between 0 and 9. The same trend between reliability and frequency is also present here, although less strongly. The reason for the less strong trend arises due to the fact that a high number of the low count readings in this range correspond to cases of strong photon starvation, where the sum over all bins is less than 5. The high occurrence of these outliers does not however impact on the efficiency of the low-count smoothing of the present set of embodiments because, in the presence of strong photon starvation, the corresponding projection data entries contain little useful information from the start.

Above has been described the process for pre-computing the reliability indices for each possible low-count reading set within a certain working range defined by group $g_{lc}$. These are stored in a datastore 230 and can be retrieved during execution of the method 200.

As discussed above, once the reliability index is obtained 216 for each low count reading set in the received projection sinogram, the method 200 further comprises tuning a smoothing kernel based on the reliability indices. In particular, the smoothing operator in this low count correction procedure is applied only to the low count readings in the projection dataset, and the strength of the smoothing is adjusted in dependence upon the reliability index, with stronger smoothing applied for lower reliability reading sets.

Tuning 218 of the smoothing kernel will now be explained further by way of an example.

For this example, $r_{lc}$ represents a particular low count reading set in the projection dataset. The corresponding reliability index $r_v$ is retrieved from a datastore for this reading set. A smoothing kernel is retrieved and its bins are determined based on a smoothing strength parameter $r_{sms}$ whose value is set based on $r_v$.

Different options are possible for determining $r_{sms}$. One option is presented in the equation below:

$$r_{sms} = \max\left(1 - \frac{r_v}{r_v^{Th}}, 0\right) \in [0\ 1] \qquad (20)$$

where $r_v^{Th}$ is a fixed threshold. By way of example, it may be set at a value of about 0.5, thereby guaranteeing that only readings for which $r_v < r_v^{Th}$ are smoothed. The bins of a smoothing kernel are then determined according to the value of $r_{sms}$.

The setting of the bins of the kernel can be achieved by defining in advance a smoothing kernel which is parametrized with a 1D parameter which defines the strength of the smoothing. An example has already been presented above in equations (10) and (11), where the smoothing kernel is parametrized with parameter $\alpha$. This same equation could be applied for step 218 of the present method 200, where parameter $\alpha$ is replaced by parameter $r_{sms}$.

The thus tuned smoothing kernel is then applied 220 to each low count reading set in the projection domain sinogram. In preferred embodiments, one or more additional steps may be taken to mitigate against potential introduction of bias, i.e., changing the mean count values in one or more sinogram regions. To avoid this possibility, it is possible to construct a correction operation comprising adding a correction to unreliable readings, and additionally compensating for the correction of each unreliable reading by modifying the counts of its neighbor readings. This modification may be a smaller count change amount than the correction itself, and with an opposite sign, for the purpose of minimizing any change in the mean values of the counts.

As discussed previously, an expanded version of the method 200 may include the method 10 of Fig. 3 or Fig. 6 as a second phase, which follows on from completion of the method 200. In other words, the low-count correction smoothing 200 is applied to the pre-decomposition projection domain data, followed by the smoothing operation discussed earlier in this disclosure with reference to Fig. 3 and Fig. 6.

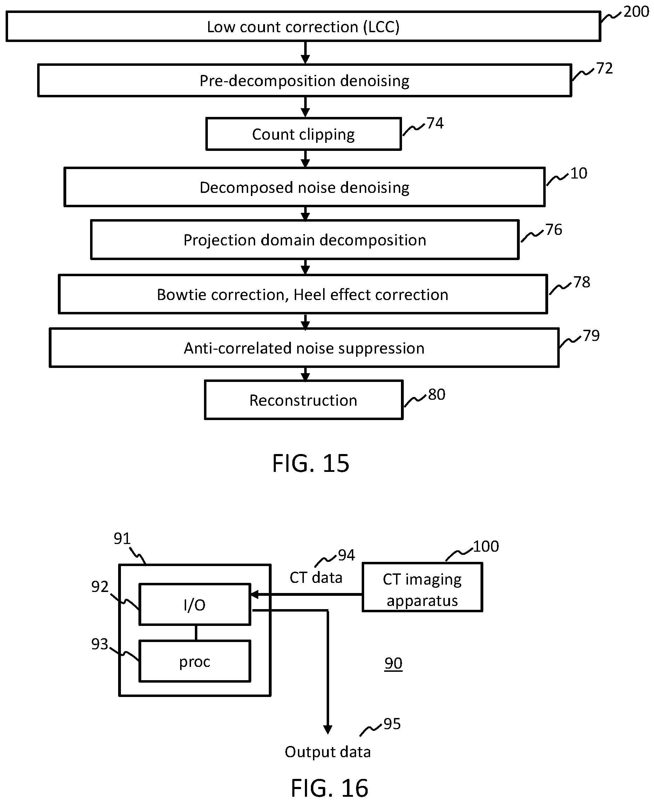

Fig. 15 shows a block diagram of a further method which represents an expanded version of the method of Fig. 11. The method of Fig. 15 includes additional pre-processing steps and post-processing steps.

The method comprises receiving a photon-count detector projection dataset. The photon counts may be calibrated by a gain-correction. The input may be in the form of a sinogram of detector count readings, where each reading contains the counts of $n_b$ two-sided bins. Although if gain correction is applied, the input count values may deviate from integer numbers, using gain correction factors which are close to unity, the input counts can be considered as integers to a very good approximation. If the gain correction factors are not close enough to unity, the smoothing strength can still be found, based on the pre-calculations. However, to do it may require a multi-dimensional interpolation where the number of dimensions equals the number of energy bins.

The method comprises optionally applying 72 pre-decomposition projection domain denoising steps, for example the PDDN method mentioned earlier in this disclosure, and/or the a-VIPR method which is described in document "Comparison of ML iterative reconstruction and TV-minimization for noise reduction in CT images," K. M. Brown, S. Zabic, and T. Koehler, Proc. Fully 3D, pp. 443-446, (2011).

The method optionally further comprises applying 74 a count clipping procedure. Count clipping refers to filtering out count values outside of a certain range defined by upper and lower bounds. This excludes outlier count values that would otherwise result in erroneous decomposed values.

Optionally, the method further comprises applying the denoising method 10 described earlier in this disclosure, and as represented in Fig. 3 and Fig. 6, termed here Decomposed Denoising (DND).

The method further comprises applying 76 the pre-determined projection domain decomposition algorithm. The decomposition algorithm may be any of a variety of different types of decomposition. The skilled person will be aware of methods for performing the decomposition. One approach is a polynomial regression approach. Another approach is a lookup table approach.

Optionally the method may further comprise application 78 of additional filtering or post-processing. For example, the method may comprise applying a bowtie effect filter, such as for example is described in the document US 2021/059633. The method may further comprise applying a heel effect filter, such as for example is described in the paper US 2008/317320.

The method optionally further comprises applying 79 a further post-decomposition filtering algorithm, such as a further anti-correlated noise filter. By way of example, one post-decomposition anticorrelated noise filter is described in the document US 2015/279005.

The method further comprises applying 80 a reconstruction algorithm, such as a filtered back projection reconstruction algorithm to reconstruct an imaging dataset.

Fig. 16 shows an example system 90 according to one or more embodiments. The system may be operable to perform one or both of the noise correction methods described above, i.e. the denoising method of Fig. 3 or Fig. 6; and the denoising method of Fig. 11.

The system comprises a processing arrangement 91 comprising an input/output 92 and one or more processors 93 connected to the input/output 92. The input/output is arranged for receiving CT projection data, for example from a CT imaging apparatus 100. Fig. 16 illustratively shows the input/output operably coupled with a CT imaging apparatus. The processing arrangement is adapted to perform any one or more of the methods described above.

The processing arrangement may in general comprise a single processor or a plurality of processors. It may be located in a single containing device, structure or unit, or it may be distributed between a plurality of different devices, structures or units. Reference therefore to the processing arrangement being adapted or configured to perform a particular step or task may correspond to that step or task being performed by any one or more of a plurality of processing components, either alone or in combination. The skilled person will understand how such a distributed processing arrangement can be implemented. The processing arrangement includes a communication module or input/output for receiving data and outputting data to further components.

The one or more processors of the processing arrangement can be implemented in numerous ways, with software and/or hardware, to perform the various functions required. A processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A method (10) for use in reducing anti-correlated noise in decomposed spectral computed tomography (CT) projection data, the decomposed spectral CT projection data being spectral CT projection data to which a pre-determined projection-domain spectral decomposition algorithm has been applied, and the anti-correlated noise being a noise component of the decomposed spectral CT projection data which arises upon application of the decomposition algorithm, the method comprising:

    obtaining (12) a multi-energy CT projection dataset comprising multi-energy measurements for each of an array of detector elements;

performing (14) a first decomposition comprising applying the pre-determined decomposition algorithm to the CT projection dataset to generate a decomposed dataset which comprises a respective decomposed value set associated with each detector element;

for each decomposed value set: lookup (16) a pre-derived statistical distribution of the expected anti-correlated noise component associated with the particular decomposed value set, the statistical distribution having a known variance about a mean, and recording the value of said variance;

forming (18) a variance sinogram, each pixel of the variance sinogram corresponding to a respective detector element and having a pixel value defined by the variance value associated with the decomposed value set which corresponds to the detector element;

detecting (20) outlier values in the variance sinogram as values which exceed a pre-defined variance threshold;

retrieving (22) a mathematical operator adapted for application to a sinogram for modifying values of the sinogram, and tune one or more parameters of the mathematical operator for eliminating the outlier variance sinogram values;

forming a projection data sinogram comprising a sinogram representation of the multi-energy projection data; and

applying (24) the tuned mathematical operator to the projection data sinogram to obtain a smoothed projection dataset.

2. The method (10) of claim 1, wherein the multi-energy projection data comprises measurement data for a photon counting detector and comprises, for each detector element, photon count values for each of a set of energy bins.

3. The method (10) of claim 1 or 2, wherein the mathematical operator is a smoothing kernel and wherein the smoothing kernel is tuned for each outlier element of the sinogram.

4. The method (10) of any of claims 1-3, wherein the tuning of the smoothing kernel takes into account the autocorrelation between anticorrelated noise components of decomposed value sets corresponding to neighboring detector elements of the detector array.

5. The method (10) of claim 4, wherein the method further comprises, for each outlier variance value: looking up (42) a pre-derived set of noise autocorrelation components for neighboring detector elements associated with the particular variance value, the autocorrelation components representing expected autocorrelation in anticorrelated noise with neighboring detector elements.

6. The method (10) of any of claims 1-5, wherein the first decomposition comprises application of the pre-determined decomposition algorithm to only a subset of the measurement value sets, to obtain a partial decomposed dataset, and application of interpolation to obtain a complete decomposed dataset.

7. The method (10) of any of claims 1-6, wherein each set of decomposed values comprises values corresponding to contributions respectively of the photoelectric effect and Compton Scatter to x-ray attenuation.

8. The method (10) of any of claims 1-7, further comprising a preliminary phase (200), performed after obtaining (12) the multi-energy CT projection dataset and before applying (14) said first decomposition, wherein the multi-energy CT projection dataset is a photon counting CT projection dataset comprising a respective set of detection count readings for a set of energy bins, for each of an array of detector elements;

the preliminary phase (200) comprising:

identifying (212) low-count reading sets by identifying sets of detection count readings for which the sum of the detection count readings across the bins is below a pre-defined threshold;

retrieving (214) a pre-computed reliability index for each identified low-count reading set, the reliability index corresponding to a pre-computed theoretical probability of obtaining the particular set of detector bin count values in the reading set;

retrieving and applying (220) a smoothing operator to a sinogram representation of the multi-energy projection dataset, the smoothing operator being applied only to the identified low count reading sets, wherein parameters of the smoothing operator for each low-count reading set are configured (218) in dependence upon the reliability index derived for the reading set.

9. The method of claim 8, wherein the parameters of the smoothing operator are configured so as to adjust a strength of smoothing applied to each low count reading set, and wherein a strength of smoothing is modified according to the reliability index.

10. The method of claim 8 or 9,

    wherein the reliability index comprises a product of a first and second component,
    wherein the first component comprises the said pre-computed theoretical probability of obtaining the particular set of detector bin count values in the reading set; and
    wherein the second component comprises a pre-computed reliability variable, indicative of a pre-determined plausibility of a decomposed value set obtained when said pre-determined decomposition algorithm is applied to the reading set.

11. The method of claim 10, wherein the second component has a value of 1 for low count readings whose corresponding decomposed value set is within a pre-defined plausibility range, and has a value of 0 for low count readings whose corresponding decomposed value set is outside of the pre-defined range.

12. The method of any of claims 1-11, further comprising:

    applying the pre-determined decomposition algorithm to the smoothed projection dataset; and
    applying a reconstruction algorithm to obtain reconstructed image data.

13. A computer program product comprising computer program code configured, when run on a processor, to cause the processor to perform the method in accordance with any of claims 1-12.

14. A processing arrangement, comprising:

    an input for obtaining a multi-energy CT projection dataset; and
    one or more processors adapted to perform a method in accordance with any of claims 1-12 on the obtained multi-energy CT projection dataset.

15. A photon-counting CT system comprising the processing arrangement according to claim 14.

Mono 70 image – noiseless (GT). WW = 200 HU.

(a)

Mono 70 image – noiseless (GT). WW = 200 HU.

Split artifacts

(b)

Decomposition FS

Ar 32 Av -888.8 std 2.078

Ar 24 Av -897.8 std 0.5369

Ar 23 Av -882.8 std 3.206

Ar 42 Av -890.3 std 2.3

(c)

FIG. 1

FIG. 2

12 — Obtain projection sinogram

↙10

14 — First Decomposition

16 — Lookup correlated noise variances

↔

DATASTORE
~32

Correlated noise statistical distributions

18 — Variance sinogram

20 — Identify variance outliers

22 — Retrieve and tune operator for eliminating outliers

24 — Apply tuned operator to projection sinogram

FIG. 3

FIG. 4

Fig. 5

FIG. 6

Noise autocorrelation component $R_{ac}(m,m)$ — vertical axis

Anticorrelated noise variance, $V_{ac}$ — horizontal axis

scatter plot
polynomial fit

FIG. 7

Denoising

Count clipping

Applying smoothing kernel

Decomposition

Bowtie correction
Heel Effect correction

Reconstruction

First decomposition

Anticorrelated noise estimation

Estimation of anticorrelated noise autocorrelation

Fit smoothing kernel

FIG. 8

FIG. 9

FIG. 10

210 — **Obtain multi-energy projection sinogram**

200

212 — **Detect low-count reading sets**

214 — **Lookup pre-computed reliability index**

DATASTORE — 230

Reliability indices

218 — **Tune smoothing operator based on reliability indices**

220 — **Apply smoothing operator to projection sinogram**

**FIG. 11**

FIG. 12

Number of
occurrences in
sinogram

FIG. 13

Number of
occurrences in
sinogram

FIG. 14

FIG. 15

FIG. 16

Europäisches
Patentamt
European
Patent Office
Office européen
des brevets

# EUROPEAN SEARCH REPORT

Application Number

**EP 23 18 1255**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/180554 A1 (BRENDEL BERNHARD JOHANNES [DE]) 23 June 2016 (2016-06-23) * figure 2 * * paragraph [0025] – paragraph [0035] * ----- | 1-15 | INV. G06T11/00 |
| A | IVAN ROMADANOV ET AL: "Adaptive noise reduction for dual-energy x-ray imaging based on spatial variations in beam attenuation", PHYSICS IN MEDICINE AND BIOLOGY, INSTITUTE OF PHYSICS PUBLISHING, BRISTOL GB, vol. 65, no. 24, 4 December 2020 (2020-12-04), page 245023, XP020359650, ISSN: 0031-9155, DOI: 10.1088/1361-6560/AB9E57 [retrieved on 2020-12-04] * the whole document * ----- | 1-15 | |
| A | MATS PERSSON ET AL: "Spectral CT reconstruction with anti-correlated noise model and joint prior", 14TH INTERNATIONAL MEETING ON FULLY THREE-DIMENSIONAL IMAGE RECONSTRUCTION IN RADIOLOGY AND NUCLEAR MEDICINE, FULLY3D, XI'AN, CHINA, 18 June 2017 (2017-06-18), pages 580-585, XP040712839, DOI: 10.12059/FULLY3D.2017-11-3203027 * the whole document * ----- | 1-15 | TECHNICAL FIELDS SEARCHED (IPC) G06T |

The present search report has been drawn up for all claims

| Place of search | Date of completion of the search | Examiner |
|---|---|---|
| Munich | 11 December 2023 | Werling, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  ......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 18 1255**

This annex lists the patent family members relating to the patent documents cited in the above-mentioned European search report.
The members are as contained in the European Patent Office EDP file on
The European Patent Office is in no way liable for these particulars which are merely given for the purpose of information.

**11-12-2023**

| Patent document cited in search report | Publication date | Patent family member(s) | | Publication date |
|---|---|---|---|---|
| US 2016180554 A1 | 23-06-2016 | CN | 105493148 A | 13-04-2016 |
| | | EP | 3039650 A1 | 06-07-2016 |
| | | JP | 6431068 B2 | 28-11-2018 |
| | | JP | 2016531692 A | 13-10-2016 |
| | | US | 2016180554 A1 | 23-06-2016 |
| | | WO | 2015028975 A1 | 05-03-2015 |

EPO FORM P0459

For more details about this annex : see Official Journal of the European Patent Office, No. 12/82

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016059527 A2
- US 10275859 B2
- US 2021059633 A
- US 2008317320 A
- US 2015279005 A

**Non-patent literature cited in the description**

- **TKACZYK et al.** Quantization of liver tissue in Dual kVp computed tomography using linear discriminant analysis. *Proc. of SPIE*, 2009, vol. 7258, 72580G1-72580G
- **K. M. BROWN ; S. ZABIC ; T. KOEHLER**. *Proc. Fully 3D*, 2011, 443-446
- **K. M. BROWN ; S. ZABIC ; T. KOEHLER**. Comparison of ML iterative reconstruction and TV-minimization for noise reduction in CT images. *Proc. Fully 3D*, 2011, 443-446